# EUROPÄISCHE PATENTANMELDUNG

(11) **EP 4 335 271 A1**
(43) Veröffentlichungstag der Anmeldung: **13.03.2024**
(21) Anmeldenummer: 23401034.6
(22) Anmeldetag: 28.08.2023
(51) Int. Cl.: A01C 7/04

(54) **LANDWIRTSCHAFTLICHE VEREINZELUNGSVORRICHTUNG ZUR VEREINZELUNG VON KÖRNIGEM MATERIAL**

(30) Priorität: 06.09.2022 DE 102022122575
(71) Anmelder: Amazonen-Werke H. Dreyer SE & Co. KG, 49205 Hasbergen (DE)
(72) Erfinder: Wien, Thomas, 28816 Stuhr (DE); Radeke, Jan Philipp, 27211 Bassum (DE); Arnold, Roland, 27777 Ganderkesee (DE)

(57) **Zusammenfassung**

Die erfindungsgemäße landwirtschaftliche Vereinzelungsvorrichtung (5) umfasst ein Gehäuse (6) aus einem ersten Gehäuseelement (6a) und einem zweiten Gehäuseelement (6b), eine am ersten Gehäuseelement (6a) drehbar gelagerte Welle (W), die eine Drehachse (D) festlegt, und ein Vereinzelungselement (7), das in einen im Gehäuse (6) festgelegten Innenraum aufgenommen ist. Das Vereinzelungselement (7) umfasst eine mit der Welle (W) drehbar gekoppelte Vereinzelungsscheibe (7a) und ein Halbschalenelement (7b), das an die Vereinzelungsscheibe (7a) anliegt, und ist derart im Gehäuse (6) angeordnet, dass zwischen der Vereinzelungsscheibe (7a) und dem ersten Gehäuseelement (6a) ein erster Bereich und zwischen der Vereinzelungsscheibe (7a) und dem Halbschalenelement (7b) ein zweiter Bereich festgelegt ist, wobei zwischen dem ersten und zweiten Bereich eine Druckdifferenz erzeugbar ist. Die Vereinzelungsscheibe (7a) weist geeignete Aussparungen zur Mitnahme einzelner Körner auf, wobei die Aussparungen räumliche Verbindungen zwischen dem ersten und zweiten Bereich des Gehäuses (6) schaffen und die Vereinzelungsvorrichtung (5) ein Abdeckelement (12) zum Unterbinden der Druckdifferenz aufweist. Ferner umfasst die Vereinzelungsvorrichtung (5) ein Haltelement (13) zur Halterung des Halbschalenelements (7b), das mit dem Gehäuse (6) drehfest verbunden und an dem das Halbschalenelement (7b) drehbar gelagert ist.

## Beschreibung

Die Erfindung betrifft eine landwirtschaftliche Vereinzelungsvorrichtung zur Vereinzelung von körnigem Material gemäß dem Oberbegriff des Patentanspruchs 1.

Für einen Landwirt ist es für eine Optimierung von Ertrag und Kosten im Landwirtschaftsbetrieb von großer Bedeutung, Saatgut mit möglichst großer Genauigkeit hinsichtlich der ausgebrachten Menge und der räumlichen Verteilung des ausgebrachten Saatguts auf landwirtschaftlichen Flächen auszubringen. Dazu ist eine Vielzahl landwirtschaftlicher Geräte bekannt, beispielsweise als gezogenes und/oder auf- bzw. angebautes Arbeitsgerät. Zu derartigen Arbeitsgeräten zählen unter anderem landwirtschaftliche Sämaschinen, die zur Abgabe von körnigem Material, insbesondere Saatgut- und/oder Dünger, auf einer landwirtschaftlichen Nutzfläche dienen. Derartige Sämaschinen umfassen hierzu neben zumindest einem zum Vorhalten des körnigen Materials geeigneten Vorratsbehälter, zumindest eine, insbesondere pneumatische, Fördereinrichtung zum Zubringen des körnigen Materials zu zumindest einer an der Sämaschine angeordneten Vereinzelungsvorrichtung. Bei anderen Ausführungsformen ist das körnige Material alternativ oder zusätzlich mittels Schwerkraft aus dem Vorratsbehälter der Vereinzelungsvorrichtung zubringbar. Die Vereinzelungsvorrichtung ist dabei dazu eingerichtet, das zubringbare körnige Material zumindest teilweise zu vereinzeln und je nach Art des körnigen Materials, insbesondere Saatguts und/oder Düngers, bedarfsgerecht in Richtung der landwirtschaftlichen Nutzfläche auszugeben.

Das körnige Material ist dabei je nach Art bzw. Sorte mit unterschiedlichen Aussaatstärken bzw. Abstände zueinander entlang der Nutzfläche auszugeben. Um diesem Bedarf mit gattungsgemäßen Vereinzelungsvorrichtungen gerecht zu werden, sind aus dem Stand der Technik verschiedene Lösungsansätze bekannt.

Eine derartige Einzelkornsämaschine ist in der DE 10 2007 062 968 A1 und der EP 0 329 095 A1 beschrieben. Die Einzelkornsämaschine weist eine Vereinzelungsvorrichtung zur Vereinzelung von Saatgut auf. Die Vereinzelungsvorrichtung ist in einem Gehäuse angeordnet und umfasst zumindest ein mittels einer Welle rotierend angetriebenes, aus Kunststoff bestehendes Vereinzelungselement. Das Vereinzelungselement unterteilt den Innenraum des Gehäuses derart, dass mittels eines Gebläses eine Druckdifferenz zwischen einem ersten Bereich und einem zweiten Bereich erzeugbar ist. Das Vereinzelungselement weist entlang seiner Umfangsrichtung und/oder in seinem äußeren Bereich in der Nähe der Umfangs linie in regelmäßigen Abständen geeignete Aussparungen zur Mitnahme einzelner Körner des körnigen Gutes auf. Die Aussparungen schaffen räumliche Verbindungen zwischen dem ersten und dem zweiten Bereich des Gehäuses. Die Körner lagern sich aufgrund der Druckdifferenz an diesen Aussparungen an. Zusätzlich weist die Vereinzelungsvorrichtung an geeigneter Stelle ein Abdeckelement auf, welches durch zeitweises Abdecken der Aussparungen die Druckdifferenz und somit eine fortdauernde Anlagerung der transportierten Körner die Aussparungen unterbindet.

Es besteht ein fortwährender Bedarf an einer Optimierung der Genauigkeit bei der Ausbringung von Saatgut und/oder Düngemitteln bei Sämaschinen.

Diese Aufgabe wird durch eine landwirtschaftliche Vereinzelungsvorrichtung zur Vereinzelung von körnigem Material gemäß Anspruch 1 gelöst. Weitere vorteilhafte Ausgestaltungen der Erfindung sind in den abhängigen Ansprüchen definiert.

In anschaulichen Ausführungsformen der Erfindung wird eine landwirtschaftliche Vereinzelungsvorrichtung zur Vereinzelung von körnigem Material, insbesondere Saatgut und/oder Dünger, bereitgestellt. Die Vereinzelungsmaschine umfasst dabei ein Gehäuse gebildet aus einem ersten Gehäuseelement und einem an dem ersten Gehäuseelement lösbar montierten zweiten Gehäuseelement, eine am ersten Gehäuseelement drehbar gelagerte Welle, die eine Drehachse festlegt, und ein Vereinzelungselement, das in einen im Gehäuse festgelegten Innenraum aufgenommen ist, wobei das Vereinzelungselement eine mit der Welle drehbar gekoppelte Vereinzelungsscheibe und ein Halbschalenelement umfasst, das an die Vereinzelungsscheibe anliegt. In anschaulichen Beispielen hierin kann das Halbschalenelement an die Vereinzelungsschiebe reibschlüssig anliegen, so dass das Halbschalenelement und die Vereinzelungsscheibe miteinander derart mechanisch gekoppelt sind, dass eine relative rotierende Bewegung zwischen dem Halbschalenelement und der Vereinzelungsscheibe durch dazwischen herrschende reibbedingte Kräfte verhindert oder geregelt ist. Mit anderen Worten kann zwischen dem Halbschalenelement und der Vereinzelungsscheibe eine kraftschlüssige Verbindung ausgebildet, bei der ein Drehmoment bzw. die Axialkraft bei einer relativen Bewegung zwischen dem Halbschalenelement und der Vereinzelungsscheibe jedoch nur über die Reibung dieser gekoppelten Elemente übertragen wird. In anderen anschaulichen Beispielen kann das Halbschalenelement mit der Vereinzelungsschiebe durch eine andere mechanische Verbindung gekoppelt sein, beispielsweise über eine mechanische Verzahnung, Pins usw.

Das Vereinzelungselement ist derart im Gehäuse angeordnet ist, dass zwischen der Vereinzelungsscheibe und dem ersten Gehäuseelement ein erster Bereich festgelegt ist und zwischen der Vereinzelungsscheibe und dem Halbschalenelement ein zweiter Bereich festgelegt ist. Im Innenraum zwischen dem ersten Bereich und dem zweiten Bereich ist mittels eines Druckreservoirs, beispielsweise eines Gebläses, eine Druckdifferenz erzeugbar. Die Vereinzelungsscheibe weist dabei entlang ihrer Umfangsrichtung und/oder in ihrem äußeren Bereich in der Nähe der Umfangslinie in regelmäßigen Abständen geeignete Aussparungen zur Mitnahme einzelner Körner des körnigen Materials auf, wobei die Aussparungen räumliche Verbindungen zwischen dem ersten und dem zweiten Bereich des Gehäuses schaffen und sich die Körner aufgrund der Druckdifferenz an diesen Aussparungen anlagern. Die Vereinzelungsvorrichtung weist ferner an geeigneter Stelle ein Abdeckelement auf, welches zum Unterbinden der Druckdifferenz und somit einer fortdauernden Anlagerung der transportierten Körner die Aussparungen zeitweise abdeckt. In der Vereinzelungsvorrichtung ist ferner ein Haltelement zur Halterung des Halbschalenelements bereitgestellt, das mit dem Gehäuse drehfest verbunden und an dem das Halbschalenelement drehbar gelagert ist. Dadurch ist das Halbschalenelement des Vereinzelungselements nicht direkt an dem Gehäuse drehbar gelagert, sondern an dem Halteelement. Dies erlaubt den zweiten Bereich im Gehäuse unabhängig von den Dimensionen des Gehäuses festzulegen, wodurch sich die Druckdifferenz im Vereinzelungselement an der Vereinzelungsscheibe sehr genau vorgeben lässt. Dies stellt eine Optimierung der Vereinzelungsvorrichtung dahingehend dar, dass eine Mitnahme einzelner Körner entlang eines Transports durch die Vereinzelungsscheibe mit großer Zuverlässigkeit sichergestellt werden kann.

In weiteren anschaulichen Ausführungsformen der Erfindung kann das Halteelement an dem ersten Gehäuseelement lösbar montiert sein und das zweite Gehäuseelement kann mittels dem an dem ersten Gehäuseelement montierten Halteelement an dem ersten Gehäuseelement lösbar montiert sein. Dies stellt eine Sicherungsstruktur der Vereinzelungsvorrichtung dar, die einen falschen Zusammenbau der Vereinzelungsvorrichtung verhindert und in der das Halbschalenelement mit der Vereinzelungsscheibe mechanisch gekoppelt und in Reibschluss gebracht wird, unabhängig von einer Montage des zweiten Gehäuseelements am ersten Gehäuseelement. Die Montage des zweiten Gehäuseelements führt zu einer endgültigen Fixierung aller Komponenten in der Vereinzelungsvorrichtung, ohne dass ein zusätzlicher mechanischer Druck durch das zweite Gehäuseelement auf die Komponenten im Gehäuse ausgeübt werden muss.

In vorteilhaften Ausgestaltungen in diesen Ausführungsformen kann das Halteelement mittels eines Bajonettverschlusses an dem ersten Gehäuseelement angebracht sein und der geschlossene Bajonettverschluss zwischen dem Halteelement und dem ersten Gehäuseelement kann eine Durchgangsöffnungen in dem Halteelement und dem ersten Gehäuseelement in eine fluchtende Ausrichtung zueinander bringen, so dass wenigstens ein an dem zweiten Gehäuseelement ausgebildeter Verriegelungsstift mit den fluchtenden Durchgangsöffnungen in Eingriff stehen kann. Dabei stellt der Bajonettverschluss zwischen dem ersten Gehäuseelement und dem Halteelement eine einfache und zuverlässige Art eines Sicherheitsverschlusses dar, der eine direkte Montage des ersten Gehäuseelements an dem zweiten Gehäuseelement verhindert.

In weiteren anschaulichen Ausführungsformen der Erfindung kann das Halteelement mit dem darin gehalterten Halbschalenelement derart im Gehäuse angeordnet sein, dass zwischen dem Halteelement und dem zweiten Gehäuseelement ein dritter Bereich gebildet ist, der an einer Verbindungsstelle zwischen dem Halbschalenelement und dem zweiten Gehäuseelement gegenüber dem zweiten Bereich abgedichtet ist. Dadurch lässt das Halbschalenelement in einer sehr stabilen Anordnung im Gehäuse relativ zur Vereinzelungsscheibe positionieren und haltern, wobei eine bestimmte Druckdifferenz zwischen dem ersten Bereich und dem zweiten Bereich genau eingestellt werden kann.

In weiteren anschaulichen Ausführungsformen der Erfindung kann das Halteelement als ein Haltebügel ausgebildet sein. Dabei kann ein Haltebügel ein mehr oder weniger gebogenes Element darstellen, das kostengünstig ohne übermäßigen Materialaufwand zur Halterung des Halbschalenelement bereitgestellt sein kann. Der Haltebügel kann in das Gehäuse aufgenommen sein, indem der Haltebügel Endabschnitte aufweist, die entlang einer Längsrichtung des Haltebügels an zwei gegenüberliegenden Enden davon angeordnet sind, die axial zur Drehachse zwischen den ersten und zweiten Gehäuseelementen angeordnet sind, oder die radial zur Drehachse innerhalb des zweiten Gehäuseelements angeordnet sind. In anschaulichen Beispielen hierin kann der Haltebügel ferner mit einem ringförmigen Flanschabschnitt, beispielsweise mit einer darin gebildeten umlaufenden Dichtung, verbunden sein, der zwischen dem ersten Gehäuseelement und dem zweiten Gehäuseelement des Gehäuses eingesetzt ist, wodurch eine Abdichtung des Gehäuses der Vereinzelungsvorrichtung verbessert werden kann. In einigen anschaulichen Beispielen des Haltebügels mit ringförmigen Flanschabschnitt kann der ringförmige Flanschabschnitt des Haltebügels axial zur Drehachse zwischen den ersten und zweiten Gehäuseelementen angeordnet sein oder es kann der ringförmige Flanschabschnitt zwischen dem ersten Gehäuseelement und dem zweiten Gehäuseelement derart angeordnet sein, dass der Haltebügel in das Gehäuse vollständig eingehaust sein kann, indem der ringförmige Flanschabschnitt bzw. der Haltebügel radial zur Drehachse innerhalb des zweiten Gehäuseelements angeordnet ist.

Alternativ zu diesen Ausführungsformen kann das Halteelement als eine Halterungshalbschale ausgebildet sein, die einen ringförmigen Flanschabschnitt, beispielsweise mit einer darin gebildeten umlaufenden Dichtung, aufweisen kann, der zwischen dem ersten Gehäuseelement und dem zweiten Gehäuseelement des Gehäuses eingesetzt ist, wodurch eine Abdichtung des Gehäuses der Vereinzelungsvorrichtung verbessert werden kann. Dabei kann der ringförmige Flanschabschnitt axial bezüglich der Drehachse zwischen den ersten und zweiten Gehäuseelementen als Teil einer Dichtung des Gehäuses ausgebildet sein (beispielsweise indem die Halterungshalbschale derart eingesetzt ist, dass der Flanschabschnitt der Halterungshalbschale an dem ersten Gehäuseelement anliegt und das zweite Gehäuseelement an den Flanschabschnitt der Halterungshalbschale entlang einer Richtung axial zur Drehachse anliegt) oder es kann der ringförmige Flanschabschnitt in das Gehäuse vollständig eingehaust sein (beispielsweise indem die Halterungshalbschale derart eingesetzt ist, dass der Flanschabschnitt der Halterungshalbschale wenigstens an eines aus dem ersten Gehäuseelement und dem zweiten Gehäuseelement radial innenliegend bezüglich der Drehachse anliegt. Beispielsweise kann der Flanschabschnitt der Halterungshalbschale radial zur Drehachse derart an das zweite Gehäuseelement anliegen, dass die Halterungshalbschale vollständig von dem zweiten Gehäuseelement umschlossen ist). Die Halterungshalbschale kann als mit oder ohne Aussparungen oder Durchbrüchen ausgebildet sein, so dass die Halterungshalbschale mit Dichtung am Flanschabschnitt der Halterungshalbschale eine Abdichtung des zweiten Bereiches zum zweiten Gehäuseelement bereitstellen kann. In einigen anschaulichen Ausgestaltungen hierin kann zwischen dem zweiten Gehäuseelement und der Halterungshalbschale eine in Umfangsrichtung des zweiten Gehäuseelements gebildete Gehäusedichtung ausgebildet sein, wodurch eine Abdichtung des Gehäuses weiter optimiert werden kann. In Beispielen hierin kann der Flanschabschnitt der Halterungshalbschale eine ringförmige Nut in einer Fläche aufweisen, die als Anlagefläche an das erste Gehäuseelement dient.

In weiteren anschaulichen Ausführungsformen der Erfindung kann das Haltelement zur Aufnahme des Halbschalenelements derart ausgebildet sein, dass lediglich ein mechanischer Kontakt zwischen dem Halteelement und dem Halbschalenelement an einem Lager ausgebildet ist. Dies kann verhindern, dass eine elektrostatische Ladung zwischen dem Halteelement und dem Halbschalenelement durch Reibung zwischen dem Halbschalenelement und dem Halteelement induziert wird. Außerdem erfolgt eine Verminderung der Relativbewegung der Bauteile gegeneinander auf Größenordnung des Lagers und nicht mehr auf dem Umfang der Vereinzelungsscheibe. Das Halteelement kann ferner zentral einen Statorteller aufweisen, der einen zum Halbschalenelement zugewandten Statorbecher umfasst, an dessen Mantelfläche das Lager aufgestützt ist, beispielsweise als Ringlager. Dadurch kann vorteilhaft eine Berührung von Oberflächen des Halteelements und der Halterungsschale, die im Wesentlichen senkrecht zu einer Drehachse der Welle orientiert sind, verhindert werden, da der Statorbecher einen Versatz einer Drehebene, in der die Halterungsschale relative zum Halteelement rotiert, zu einer Oberfläche des Haltelements eingestellt werden kann.

In weiteren anschaulichen Ausführungsformen der Erfindung kann das erste Gehäuseelem ent eine Zuführungsleitung aufweisen, die mit dem ersten Bereich verbunden ist, um den ersten Bereich mit einem gegenüber dem zweiten Bereich erhöhten Druck zu beaufschlagen. Dadurch stellt die Vereinzelungsvorrichtung eine vorteilhafte Realisierung einer Überdruckvereinzelungsvorrichtung dar. Zusätzlich oder alternativ kann das Halterungselement und/oder das zweite Gehäuseelement eine Zuführungsleitung aufweisen, die mit dem zweiten Bereich verbunden ist, um den zweiten Bereich mit erniedrigtem Druck zu beaufschlagen.

Weitere Einzelheiten der Erfindung sind der nachfolgenden ausführlichen Beschreibung von anschaulichen Ausführungsformen mit Bezug auf die Zeichnungen zu entnehmen. Dabei zeigen die Zeichnungen in:
Fig. 1 ein Säaggregat einer landwirtschaftlichen Sämaschine in einer perspektivischen Explosionsdarstellung;
Fig. 2 eine landwirtschaftliche Vereinzelungsvorrichtung in einer perspektivischen Explosionsdarstellung mit einem Halteelement gemäß anschaulicher Ausführungsformen.;
Fig. 3 die landwirtschaftliche Vereinzelungsvorrichtung aus Fig. 2 in einer Querschnittsansicht;
Fig. 4 bis 6 eine Sicherungsfunktion der landwirtschaftlichen Vereinzelungsvorrichtung aus Fig. 2 gegen Fehlverbauung in einer perspektivischen Ansicht;
Fig. 7 eine landwirtschaftliche Vereinzelungsvorrichtung mit einem Halteelement gemäß alternativer Ausführungsformen;
Fig. 8 eine landwirtschaftliche Vereinzelungsvorrichtung mit einem anderen Halteelement gemäß weiterer anschaulicher Ausführungsformen;
Fig. 9 eine landwirtschaftliche Vereinzelungsvorrichtung in einer perspektivischen Ansicht gemäß weiterer anschaulicher Ausführungsformen; und
Fig. 10 eine Querschnittsansicht der in Fig. 9 dargestellten Ausführungsformen.

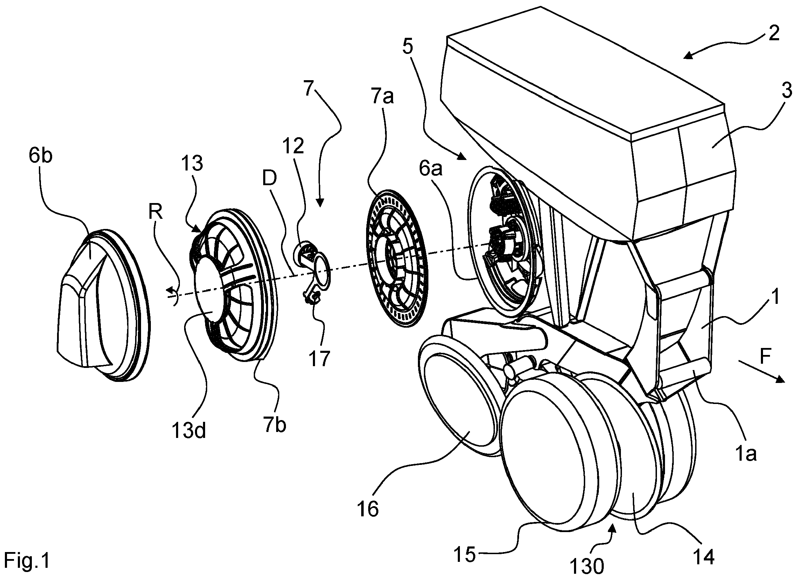

Mit Bezug auf Fig. 1 ist ein Säaggregat 2 einer landwirtschaftlichen Sämaschine (nicht dargestellt) in einer perspektivischen Explosionsdarstellung dargestellt. Das Säaggregat 2 kann mittels Trageelemente 1, an einem quer zur Fahrtrichtung F der Sämaschine (nicht dargestellt) ausgerichteten Rahmen (in Fig. 1 ist ein Rahmenelement 1a eines senkrecht zur Fahrtrichtung F orientierten Rahmens, beispielsweise ein Teleskoprahmen, gezeigt, wobei das Rahmenelement 1a ein Teleskoprahmenelement darstellt) der landwirtschaftlichen Sämaschine (nicht dargestellt) befestigt sein. Das Säaggregat 2 kann dabei in der Sämaschine (nicht dargestellt) als eines von mehreren Säaggregaten (nicht dargestellt) an dem Rahmen (nicht dargestellt) befestigt sein, so dass mittels von mindestens einem weiteren Säaggregaten (nicht dargestellt) neben dem Säaggregat 2 eine oder mehrere weitere Saatrillen mit Saatgut befüllt und/oder entlang einer oder mehrerer Rillen Düngemittel ausgebracht werden kann.

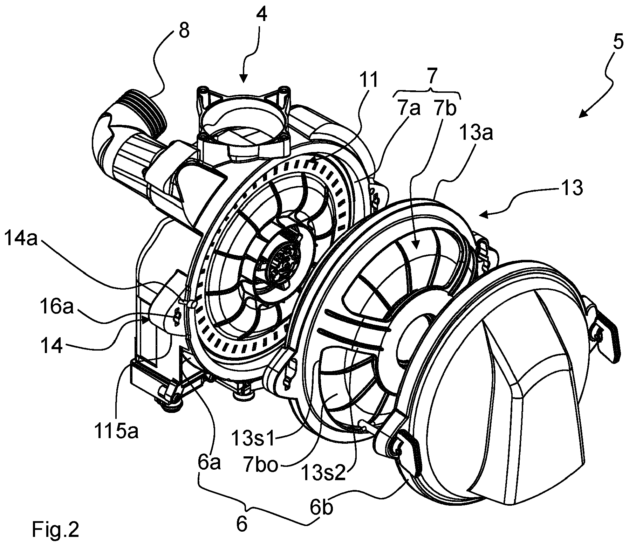

Gemäß der Darstellung in Fig. 1 weist das Säaggregat 2 einen Vorratsbehälter 3 zur Bevorratung von auszubringendem körnigen Material, insbesondere Saatgut und/oder Dünger, auf. Der untere Bereich des Vorratsbehälters 3 ist als Auslaufbereich ausgestaltet, in welchem eine Auslauföffnung (in Fig. 1 nicht dargestellt, vgl. Bezugszeichen 4 in Fig. 2) angeordnet ist. Über die Auslauföffnung (in Fig. 1 nicht dargestellt, vgl. Bezugszeichen 4 in Fig. 2) wird das auszubringende körnige Material einer Vereinzelungsvorrichtung 5 zugeführt, die unterhalb des Vorratsbehälters 3 angeordnet ist.

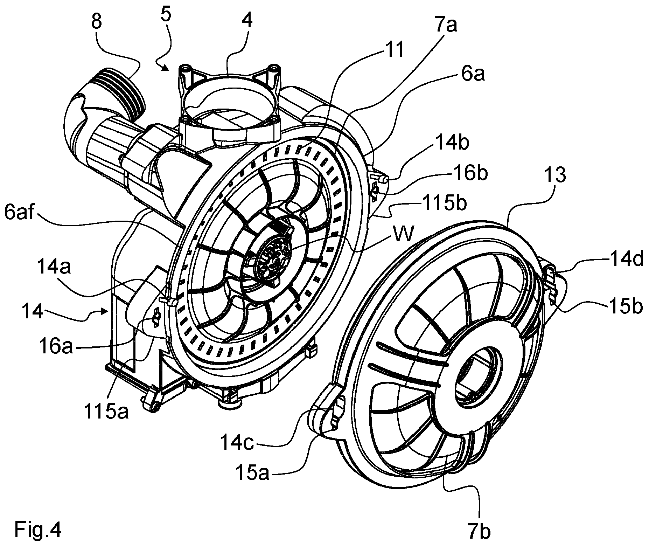

Mit Bezug auf Fig. 1 bis 3 wird nun die Vereinzelungsvorrichtung 5 im Detail beschrieben. Die Vereinzelungsvorrichtung 5 umfasst ein Gehäuse 6 gebildet aus einem ersten Gehäuseelement 6a und einem an dem ersten Gehäuseelement 6a lösbar montierten zweiten Gehäuseelement 6b. Innerhalb des Gehäuses 6 ist ein in einer Drehrichtung R um eine Drehachse D rotatorisch antreibbares, vorzugsweise zumindest teilweise rotationssymmetrisch ausgebildetes, Vereinzelungselement 7 angeordnet. Dabei ist das Vereinzelungselement 7 dazu ausgebildet, das im Gehäuse 6 mittels einer Zuführung aus dem Vorratsbehälter 3 bereitstellbare körnige Material zumindest teilweise zu vereinzeln. Das Gehäuse 6 weist eine am ersten Gehäuseelement 6a drehbar gelagerte Welle (vgl. Bezugszeichen W in Fig. 4) auf, durch die das Vereinzelungselement 7 drehbar angetrieben werden kann.

In anschaulichen Ausführungsformen hierin umfasst das Vereinzelungselement 7 eine zumindest teilweise als kreisförmige Scheibe ausgebildete Vereinzelungsscheibe 7a, die mit der Welle (vgl. Bezugszeichen W in Fig. 4) drehfest gekoppelt ist, so dass die Welle (vgl. Bezugszeichen W in Fig. 4) eine bestimmte Drehbewegung der Vereinzelungsscheibe 7a mit vorgegebener Drehgeschwindigkeit einstellt, und ein Halbschalenelement 7b, das an die Vereinzelungsscheibe 7a reibschlüssig anliegt. Das Vereinzelungselement 7 ist derart im Gehäuse 6 angeordnet ist, dass zwischen der Vereinzelungsscheibe 7a und dem ersten Gehäuseelement 6a ein erster Bereich B1 festgelegt ist und zwischen der Vereinzelungsscheibe 7a und dem Halbschalenelement 7b ein zweiter Bereich B2 festgelegt ist und im Innenraum zwischen dem ersten Bereich B1 und dem zweiten Bereich B2 mittels eines Druckreservoirs (nicht dargestellt) eine Druckdifferenz erzeugbar ist. Das erste Gehäuseelement 6a weist eine Öffnung auf, in die die Vereinzelungsscheibe 7a wenigstens teilweise aufgenommen ist, wobei die Öffnung des ersten Gehäuseelements 6a von einem ringförmigen Flanschabschnitt (vgl. Bezugszeichen 6af in Fig. 4) umgeben sein kann. Dies stellt jedoch keine Beschränkung dar und alternativ zur dargestellten Ausführungsform kann das Vereinzelungselement 7 anstelle der Vereinzelungsscheibe 7a auch eine zumindest teilweise trommel- oder zylinderartig ausgebildete Vereinzelungstrommel (nicht dargestellt) aufweisen.

Gemäß anschaulichen und nicht beschränkenden Ausführungsformen kann die dargestellte Vereinzelungsvorrichtung 5 ferner als Überdruckvereinzelung ausgeführt sein, wobei über ein an eine Druckzuleitung 8 anschließbares Druckreservoir (nicht dargestellt), wie zum Beispiel ein Gebläse (nicht dargestellt), im ersten Bereich B1 ein Druck erzeugt werden kann, der größer ist als ein Druck im zweiten Bereich B2. Alternativ ist auch eine Unterdruckvereinzelung oder andere Art von Vereinzelung denkbar, beispielsweise in dem der erste Bereich B1 über die Druckzuleitung 8 mit Umgebungsatmosphäre verbunden wird, während der zweite Bereich B2 über eine geeignete Zuleitung (nicht dargestellt) mit einem Unterdruckreservoir (nicht dargestellt), z.B. einem Saugelement (nicht dargestellt), verbunden ist, so dass ein Druck im ersten Bereich B1 geringer ist als ein Druck im zweiten Bereich 2.

Allgemein ist damit in den anschaulichen Ausführungsformen das Gehäuse 6 hierbei mittels des Vereinzelungselements 7 in wenigstens den ersten Bereich B1 und den zweiten Bereich B2 unterteilt. Diese Unterteilung des Gehäuses 6 über das Vereinzelungselement 7 ist derart ausgeführt, dass somit zwischen wenigstens dem ersten Bereich B1 und dem zweiten Bereich B2 eine Druckdifferenz erzeugbar ist. In einigen anschaulichen Ausführungsformen kann das Halbschalenelement 7b eine vollständige Abdichtung vom zweiten Bereich B2 zum zweiten Gehäuseelement 6b hin bewirken, beispielsweise in dem das Halbschalenelement 7b als vollständige Halbschalen ohne Aussparungen gebildet und zumindest zwischen dem Halbschalenelement 7b und der Vereinzelungsscheibe 7a bei Anordnung des Vereinzelungselements 7 im Gehäuse 6 eine Abdichtung ausgebildet ist (wie weiter unten ausführlicher beschrieben ist). Hierbei ist zu beachten, dass die mechanische Kopplung zwischen dem Halbschalenelement 7b und der Vereinzelungsscheibe 7a lediglich durch eine mechanische Einwirkung des zweiten Gehäuseelements 7a auf das erste Gehäuseelement 7a bei Anbringung des zweiten Gehäuseelements 7a am ersten Gehäuseelement 7a mittels eines Halteelements 13 angebracht wird, wie weiter unten ausführlicher beschrieben ist. Insbesondere ist kein Druckunterschied im Vereinzelungselement 7 notwendig, um das Vereinzelungselement 7 aus einer Kopplung des Halbschalenelements 7b und der Vereinzelungsscheibe 7a zu bilden.

Mit weiterem Bezug auf die Fig. 1 bis 3 weist die Vereinzelungsscheibe 7a entlang ihrer Umfangsrichtung und/oder in ihrem äußeren Bereich in der Nähe der Umfangslinie in regelmäßigen Abständen geeignete Aussparungen 11 zur Mitnahme einzelner Körner des körnigen Materials aufweist, wobei die Aussparungen 11 räumliche Verbindungen zwischen dem ersten Bereich B1 und dem zweiten Bereich B2 des Gehäuses 6 schaffen und sich die Körner aufgrund der Druckdifferenz an diesen Aussparungen 11 anlagern, und die Vereinzelungsvorrichtung 5 ferner an geeigneter Stelle ein Abdeckelement 12 aufweist, welches zum Unterbinden der Druckdifferenz und somit einer fortdauernden Anlagerung der transportierten Körner die Aussparungen 11 zeitweise abdeckt.

Gemäß der Darstellung in den Fig. 1 bis 3 sind die Aussparungen 11 in Umfangsrichtung der Vereinzelungsscheibe 7a entlang eines Durchmessers bzw. einem Radius ausgehend von der Drehachse D im Bereich eines äußeren Scheibenumfangs angeordnet. Alternativ hierzu ist auch denkbar, dass die Aussparungen 11 auf dem Umfang der Vereinzelungsscheibe 7a angeordnet sind.

Wie oben beschrieben sind der erste Bereich B1 und der zweite Bereich B2 des Gehäuses 6 über die Aussparungen 11 räumlich miteinander verbunden, so dass einzelne Körner des körnigen Materials aufgrund der Druckdifferenz, insbesondere einer daraus resultierenden Saugwirkung, zwischen den beiden Bereichen B1, B2 innerhalb der Aussparungen 11 mitnehmbar sind. Einzelne Körner werden hierbei auf einer dem ersten Bereich zuweisenden ersten Seite der Vereinzelungsscheibe 7a (im Allgemeinen die Seite, die dem Bereich mit höherem Druck zugerichtet ist) in der Rotationsrichtung R zu dem Abdeckelement 12 transportiert. Das Abdeckelement 12 ist dabei auf einer der ersten Seite gegenüberliegenden Seite der Vereinzelungsscheibe 7a angeordnet. Das Abdeckelement 12 ist ferner dazu eingerichtet, die Druckdifferenz, insbesondere lokal im Bereich des Abdeckelements 12, durch zumindest ein teilweises Abdecken von wenigstens einer Aussparung 11 temporär zu unterbinden. Aufgrund der unterbunden Druckdifferenz wird das wenigstens eine von der Vereinzelungsscheibe 7a mitgenommene Korn im Bereich des Abdeckelements 12 zum Ablösen freigegeben. Somit wird ein durch das Abdeckelement 12 freigegebenes Korn an einer definierten Position einer Saatgutablageeinrichtung 130 übergeben, wie in Fig. 1 dargestellt ist. In anschaulichen Beispielen ist das Abdeckelement 12 in Form einer Rolle ausgebildet, die durch Reibung entlang der Scheibe abrollt während sich die Vereinzelungsscheibe 7a dreht. Gemäß der Darstellung in Fig. 1 umfasst die Saatgutablageeinrichtung 130 als Scheibenschare ausgebildete Furchenöffnungselemente 14, Tiefenführungselemente 15 sowie Vorrichtungen 16 zum Schließen einer Furche.

Mit Bezug auf Fig. 1 ist weiterhin innerhalb des Gehäuses 6 zumindest ein von der Vereinzelungsscheibe 7a antreibbares Auswurforgan 17 angeordnet, beispielsweise indem das Auswurforgan 17 durch Eingriff der Zähne in Aussparungen angetrieben ist. Das Auswurforgan 17 ist auf der zweiten Seite der Vereinzelungsscheibe 7 und in Rotationsrichtung R hinter dem Abdeckelement 12 angeordnet. Dabei ist das Auswurforgan 17 dazu eingerichtet, zumindest teilweise in die Aussparungen 11 einzugreifen und somit die Aussparungen 11 von Verstopfungen und/oder Verschmutzungen zu reinigen. Dabei werden festsitzende Verschmutzungen, Körner oder sonstige Ablagerungen innerhalb der Aussparungen 11 durch ein Herausdrücken von Auswerfelementen, die an dem Auswurforgan 17 ausgebildet sind und zum Eingriff in die Aussparungen 11 eingerichtet sind, gelöst.

Mit Bezug auf die Fig. 1 bis 3 umfasst die Vereinzelungsvorrichtung 5 ferner das Haltelement 13 zur Halterung des Halbschalenelements 7b, das mit dem Gehäuse 6 drehfest verbunden und an dem das Halbschalenelement 7b drehbar gelagert ist. In anschaulichen Ausführungsformen ist das Halteelement 13 an dem ersten Gehäuseelement 6a lösbar montiert und das zweite Gehäuseelement 6b ist mittels dem an dem ersten Gehäuseelement 6a montierten Halteelement 13 an dem ersten Gehäuseelement 6a lösbar montiert ist.

In anschaulichen Ausführungsformen und gemäß der Darstellung in Fig. 2 und 4 ist das Halteelement 13 mittels eines Bajonettverschlusses 14 an dem ersten Gehäuseelement 6a angebracht. Der Bajonettverschluss 14 ist durch wenigstens einen an dem ersten Gehäuseelement 6a befestigten Bajonettstift 14a (gemäß der Darstellung in Fig. 4 sind an gegenüberliegenden Seiten des ersten Gehäuseelements 6a zwei Bajonettstifte 14a und 14b an entsprechenden Auskragungen 115a, 115b des ersten Gehäuseelements 6a ausgebildet) und eine zum damit in Eingriff treten ausgebildete und entsprechend orientierte Bajonettöffnung 14c bzw. 14d (vgl. Fig. 4) gebildet. Der Bajonettstift 14a, 14b wird in die entsprechend Bajonettöffnung 14c, 14d eingeführt und durch eine zur Drehachse D koaxiale Drehung des Halteelements 13 relativ zum ersten Gehäuseelement 6a geschlossen.

In dem Halteelement 13 ist weiterhin wenigstens eine Durchgangsöffnung ausgebildet, beispielweise gemäß der Darstellung in den Fig. 2 und 4 bis 5 die Durchgangsöffnungen 15a und 15b. Dies stellt keine Beschränkung dar und es können stattdessen eine oder mehr als zwei Durchgangsöffnungen vorgesehen sein. Obwohl die Durchgangsöffnungen 15a, 15b als ein Teil der Bajonettöffnungen 14c, 14d ausgebildet sind, wie aus den Fig. 2 und 4 bis 5 hervorgeht, stellt dies keine Beschränkung dar und die Durchgangsöffnungen 15a, 15b können unabhängig von bzw. separat zu den Bajonettöffnungen ausgebildet sein.

Mit Bezug auf die Fig. 2 und 4 bis 5 ergibt sich, dass der geschlossene Bajonettverschluss 14 zwischen dem Halteelement 13 und dem ersten Gehäuseelement 6a bedingt, dass die Durchgangsöffnungen 15a und 15b in dem Halteelement 13 mit den Durchgangsöffnungen 15a und 15b zugeordneten Durchgangsöffnung 16a und 16b, die in dem ersten Gehäuseelement 6a ausgebildet sind, in eine fluchtende Ausrichtung zueinander gebracht sind. Mit anderen Worten, nur bei einem ordentlich geschlossenen Bajonettverschluss 14 zwischen dem Halteelement 13 und dem ersten Gehäuseelement 6a sind die Durchgangsöffnungen 15a und 16a zueinander in einer fluchtenden Ausrichtung sind, so dass die Durchgangsöffnungen 15a und 16a deckungsgleich sind und eine Durchgangsöffnung durch das Haltelement 13 und das erste Gehäuseelement 6a bilden, wie auch die Durchgangsöffnungen 15b und 16b zueinander in einer fluchtenden Ausrichtung stehen, so dass die Durchgangsöffnungen 15b und 16b deckungsgleich sind und eine Durchgangsöffnung durch das Haltelement 13 und das erste Gehäuseelement 6a bilden.

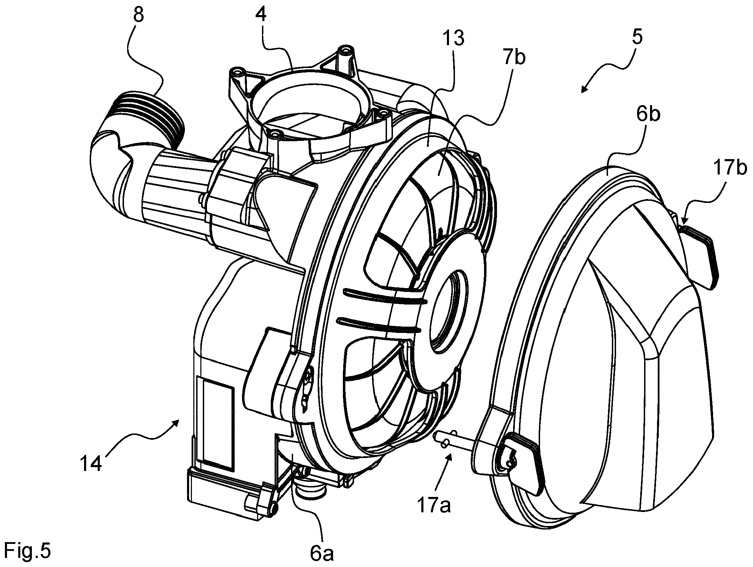

Damit können, wie in Fig. 5 dargestellt ist, entsprechend an dem zweiten Gehäuseelement 6b gebildete Verriegelungsstifte 17a und 17b in die fluchtenden Durchgangsöffnungen 15a/16a und 15b/16b eingesetzt werden, so dass das zweite Gehäuseelement 6b an dem Halteelement 13 und dem ersten Gehäuseelement 6a montiert und damit verriegelt werden kann. Es wird somit eine integrale Sicherung bereitgestellt, die nur eine ordentliche Montage und keine Fehlverbauung zulässt. Insbesondere ist sichergestellt, dass das zweite Gehäuseelement 6b nur dann montiert werden kann bzw. montierbar ist, wenn das Halteelement 13 mit dem darin angeordneten, darin vollständig aufgenommen und davon gehalterten Halbschalenelement 7b an dem ersten Gehäuseelement 6a angebracht ist.

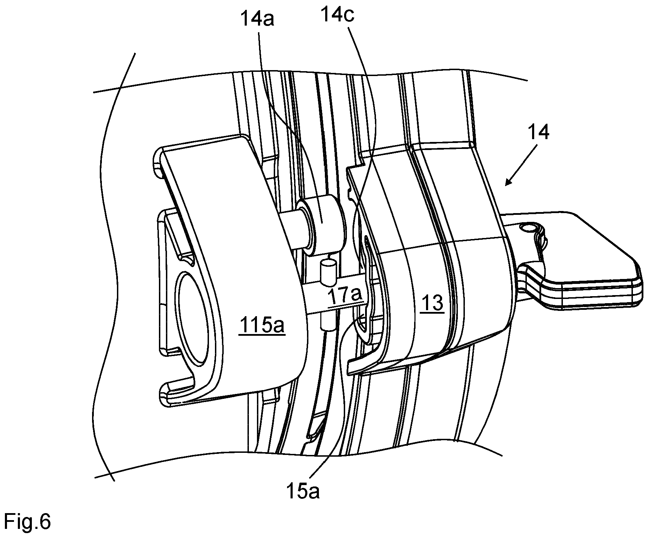

Fig. 6 zeigt in einer vergrößerten Ansicht des Bajonettverschlusses 14 an der Auskragung 115a (entsprechendes gilt auch für die andere Auskragung 115b und damit für jede Auskragung) in einer Fehlverbauung, wonach das zweite Gehäuseelement 6b zuerst an dem Halteelement 13 montiert ist, indem der Verriegelungsstift 17a in die Durchgangsöffnung 15a des Halteelements 13 eingesetzt ist. Durch den eingesetzten Verriegelungsstift 17a kann der Bajonettverschluss 14 nicht geschlossen werden, da der Bajonettstift 14a nun nicht mehr in die Bajonettöffnung 15a eingesetzt werden kann. Auf diese Weise verhindert der Bajonettverschluss 14 effektiv eine Fehlverbauung.

In den anschaulichen Ausführungsformen hierin, wie oben beschrieben, ist das Halteelement 13 mit dem darin gehalterten Halbschalenelement 7b derart im Gehäuse 6 angeordnet, dass zwischen der Vereinzelungsscheibe 7b und dem zweiten Gehäuseelement 6b ein dritter Bereich B3 gebildet ist, der von dem zweiten Bereich B2 räumlich getrennt ist. Der zweite Bereich B2 ist über eine Öffnung 6bo mit einer Umgebung verbunden, so dass der Bereich B2 über die Öffnung 6bo auf Umgebungsdruck gehalten wird. Bei einem im ersten Bereich B1 anliegenden Überdruck kann ein Fluidstrom durch die Öffnung 6bo aus dem Gehäuse 6 herausströmen.

Mit Bezug auf die in den Fig. 1 bis 5 dargestellten Ausführungsformen ist das Halteelement 13 in Form einer Halterungshalbschale (wie in den Darstellungen der Fig. 1 bis 5 dargestellt ist) ausgebildet. Wie in den Fig. 1 bis 5 dargestellt kann die Halterungshalbschale 13 in Form einer semisphärischen Halbschale mit einer Mehrzahl von Aussparungen 13s1 (vgl. Fig. 2) ausgebildet sein, die als Materialdurchbrüche in der Halterungshalbschale 13 derart gebildet sind, dass eine äußere Oberfläche 7bo (vgl. Fig. 2) des Halbschalenelements 7b teilweise freiliegt bzw. teilweise unbedeckt ist und jeweils zwischen zwei benachbarten Aussparungen 13s1 eine radiale Materialstrebe 13s2 (vgl. Fig. 2) gebildet ist, wobei die äußere Oberfläche 7bo des Halbschalenelements 7b eine auf der Vereinzelungsscheibe 7a abgewandten Seite des Halbschalenelements 7b darstellt. Gemäß der Darstellung in Fig. 4 und 5 können drei radiale Materialstreben 13s2 (vgl. Fig. 2) gebildet sein. Dies stellt keine Beschränkung dar und alternativ können mindestens vier radiale Materialstreben 13s2 (vgl. Fig. 2) ausgebildet sein.

Mit weiterem Bezug auf die Fig. 1 bis 5 kann die Halterungshalbschale 13 ferner einen ringförmigen Flanschabschnitt 13a mit einer darin gebildeten umlaufenden Dichtung 13b aufweisen, der zwischen dem ersten Gehäuseelement 6a und dem zweiten Gehäuseelement 6b zur Abdichtung des Gehäuses 6 eingesetzt ist. Hierbei liegt der ringförmige Flanschabschnitt 13a der Halterungshalbschale 13 an das erste Gehäuseelement 6a an, beispielsweise kann der einen ringförmigen Flanschabschnitt 13a der Halterungshalbschale 13 an einen ringförmigen Flanschabschnitt 6af des ersten Gehäuseelements 6a anliegen. Im montierten Zustand, in dem die Vereinzelungsscheibe 7a im ersten Gehäuseelement 6a angeordnet ist (z.B. vgl. Fig. 2 bis 4), liegt bei einer Montage des zweiten Gehäuseelements 6b am ersten Gehäuseelement 6a der ringförmige Flanschabschnitt 13a der Halterungshalbschale 13 am ringförmigen Flanschabschnitt 6af des ersten Gehäuseelements 6a an, so dass der ringförmige Flanschabschnitt 13a der Halterungshalbschale 13 zwischen dem ringförmigen Flanschabschnitt 6af des ersten Gehäuseelements 6a und dem ringförmigen Flanschabschnitt 6bf des zweiten Gehäuseelements 6b angeordnet.

Des Weiteren kann die Halterungshalbschale 13 zur Aufnahme des Halbschalenelement 7b derart ausgebildet sein, dass lediglich ein mechanischer Kontakt zwischen der Halterungshalbschale 13 und dem Halbschalenelement 7b an einem Lager 18 ausgebildet ist. Das Lager 18 kann sich auf einem zentral in der Halterungshalbschale 13 gebildeten Statorteller 13c abstützen. In anschaulichen Beispielen, wie in Fig. 2 dargestellt ist, kann der Statorteller 13c einen hohlzylindrischen Statorbecher 13e aufweisen, der am Statorteller 13c dem Bereich B2 hin zugewandt ist. Der Statorteller 13c kann beidseitig geöffnet sein, so dass eine Passage für eine durchströmendes Fluid von dem zweiten Bereich B2 zum gegenüberliegenden geöffneten Ende des Statorbechers 13e bereitgestellt ist und damit eine fluide Verbindung zwischen dem zweiten Bereich B2 und dem dritten Bereich B3 an diesem Bereich des Statortellers 13c ausgebildet ist. Der Statorbecher 13e kann eine Tragestruktur darstellen und auf einem Mantel des Statorbechers 13e kann sich das Lager 18 beispielsweise in Form eines Ringlagers abgestützen.

In einigen anschaulichen Ausführungsformen kann ferner ein Unterdruckanschluss (nicht dargestellt) im Bereich 13e und/oder dem zweiten Gehäuseelement 6b für eine Unterdruckvereinzelung bereitgestellt sein. Dieser Unterdruckanschluss (nicht dargestellt) kann zusätzlich oder alternativ zu einem über die Druckleitung 8 verbundenen Druckreservoir (nicht dargestellt) bereitgestellt sein. Dadurch kann alternativ oder zusätzlich innerhalb des Gehäuses ein Strömungsprofil eingestellt werden.

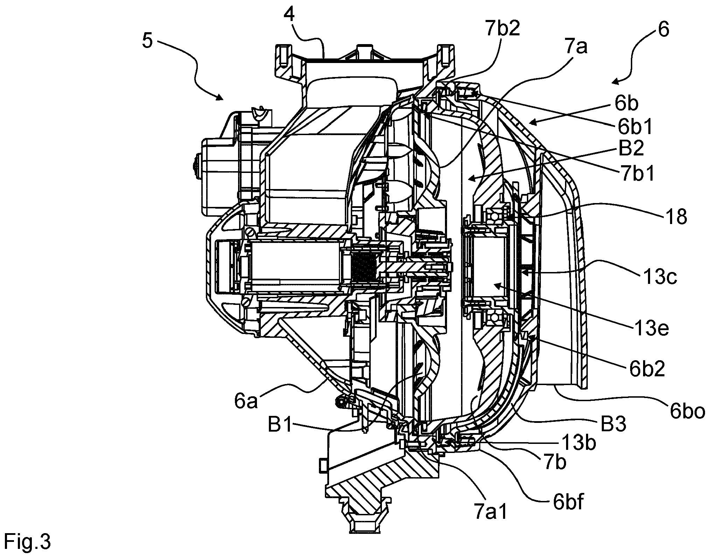

Mit Bezug auf Fig. 3 kann zwischen dem zweiten Gehäuseelement 6b und der Halterungshalbschale 13 eine in Umfangsrichtung des zweiten Gehäuseelements 6b gebildete ringförmige Gehäusedichtung 6b1 ausgebildet sein. In anschaulichen Beispielen und gemäß der Darstellung in Fig. 3 kann jeder der ringförmigen Flanschabschnitte 6bf und 13a eine ringförmige Nut aufweisen, die auf einer dem ersten Gehäuseelement 6a zuweisenden Seite gebildet ist und in der ein Dichtmaterial der Dichtung 13b angeordnet ist. Zur weiteren Abdichtung kann das zweite Gehäuseelement 6b mittels eines ringförmigen Dichtelements 6b2, das an dem zweiten Gehäuseelement 6b angebracht ist, zusätzlich gegen den Statorteller 13c abgedichtet sein. In speziellen anschaulichen Beispielen hierin kann das ringförmige Dichtelement 6b2 eine zentrale Dichtung zwischen Statorteller 13c und zweitem Gehäuseelement 6b im dritten Bereich B3 darstellen. Damit stellt das Dichtelement 6b2 eine Abdichtung zwischen dem dritten Bereich B3 und dem zweiten Bereich B2 bereit, so dass zwischen beiden Bereichen kein Druckausgleich erfolgen kann, insbesondere ein Druckausgleich am Statorteller 13c verhindert wird. Der dritte Bereich B3 ist mit dem ersten Bereich B1 in Fluidverbindung, da zwischen der Vereinzelungsscheibe 7a und dem ersten Gehäuseelement 6a eine spaltförmige Verbindung zwischen dem ersten Bereich B1 und dem dritten Bereich B3 nicht verhindert werden kann. Durch die Abdichtung des dritten Bereichs B3 mittels des Dichtelements 6b2 wird erreicht, dass ein Druck im Bereich B3 nicht zum zweiten Bereich B2 hin abgebaut werden kann, so dass der erste Bereich B1 und der dritte Bereich B3 zumindest im Wesentlichen auf dem gleichen Druckniveau gehalten werden. Es wird somit effizient verhindert, dass sich Saatkörner am Spalt zwischen der Vereinzelungsscheibe 7a und dem ersten Gehäuseelement 6a ansammeln. Dieser Effekt ist unabhängige von einer speziellen Ausführungsform des Halteelements 13 und wird entsprechend auch in jeder anderen der hierein beschriebenen Ausführungsformen erreicht, da der dritte Bereich unabhängig von der konkreten Ausgestaltung des Halteelements 13 im Rahmen der hierein offenbarten Ausführungsformen zwischen der Vereinzelungsscheibe 7b und dem zweiten Gehäuseelement 6b festgelegt ist.

Mit weiteren Bezug auf Fig. 3 kann bei Anbringung des Halbschalenelements 7b in dem Gehäuse 6 durch die mechanische Montage des zweiten Gehäuseelements 6b mittels des Halteelements 13 an dem ersten Gehäuseelement 6a, wobei das Halbschalenelement 7b vollständig in das Halteelement 13 aufgenommen und davon gehaltert wird, eine Dichtung 7b1 zwischen dem Halbschalenelement 7b und der Vereinzelungsscheibe 7a ausgebildet sein. Beispielsweise kann das Halbschalenelement 7b einen äußeren Umfangsflanschabschnitt 7b2 aufweisen, an dem die Dichtung 7b1 als vollständig umlaufende Ringdichtung ausgebildet ist und mechanisch an einen Außenumfangsabschnitt 7a1 der Vereinzelungsscheibe 7a gedrückt wird.

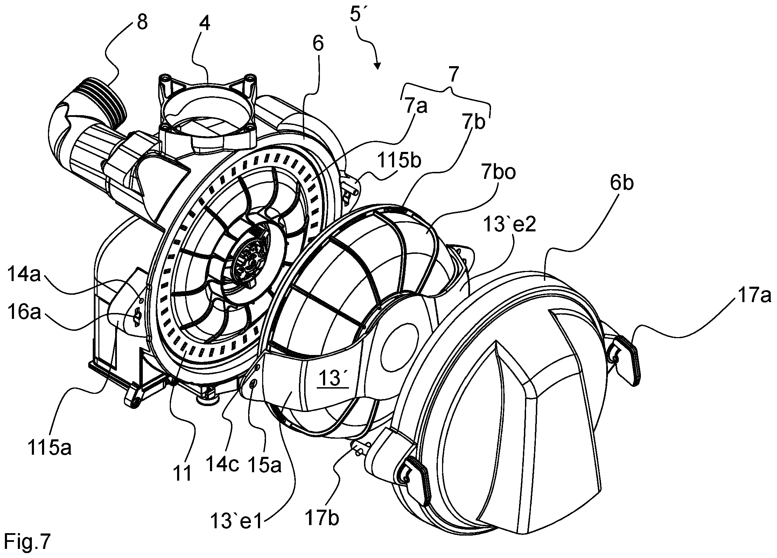

Mit Bezug auf Fig. 7 ist eine landwirtschaftliche Vereinzelungsvorrichtung 5' mit einem Halteelement 13' gemäß zu der oben mit Bezug auf Fig. 1 bis 5 beschriebenen Ausführungsformen alternativer Ausführungsformen dargestellt. Dabei unterscheidet sich die Vereinzelungsvorrichtung 5' von der hinsichtlich der Fig. 1 bis 6 beschriebenen Vereinzelungsvorrichtung 5 lediglich in der Ausgestaltung des Halteelements 13', das zu dem oben beschriebenen Halteelement 13 in einer alternativen Ausgestaltung ausgebildet ist. Abgesehen davon sind die weiteren Elemente der Vereinzelungsvorrichtung 5' gleich oder ähnlich zu den Elementen der Vereinzelungsvorrichtung 5 wie hinsichtlich der Fig. 1 bis 6 oben beschrieben ist, und damit werden gleiche Bezugszeichen hinsichtlich dieser Elemente für diese Elemente in der Vereinzelungsvorrichtung 5' verwendet. Der Übersicht halber wird auf eine erneute Beschreibung der Elemente der Vereinzelungsvorrichtung 5' mit gleichen Bezugszeichen wie der Vereinzelungsvorrichtung 5 verzichtet und die entsprechende Offenbarung wird durch Bezugnahme an dieser Stelle vollumfänglich aufgenommen. Damit gelten insbesondere die oben beschriebenen Ausführungsformen auch entsprechend im Rahmen der Vereinzelungsvorrichtung 5` und als einziger Unterschied ist nun das Halteelement 13' beschrieben, das sich von dem Halteelement 13 wie folgt unterscheidet.

Mit Bezug auf Fig. 7 ist das Halteelement 13' als ein Haltebügel 13' ausgebildet, der das Halbschalenelement 7b haltert und lediglich eine Oberfläche des Halbschalenelements 7b teilweise entlang einem bügelförmigen Streifen bedeckt. Durch den Haltebügel 13' wird das Halbschalenelement 7b derart im Gehäuse 6 angeordnet ist, dass zwischen der Halterungshalbschale 13 und dem zweiten Gehäuseelement 6b ein dritter Bereich B3 gebildet ist, der von dem zweiten Bereich B2 räumlich getrennt ist.

In anschaulichen Ausführungsformen und in Analogie zu der Beschreibung hinsichtlich der Fig. 1 bis 6 oben kann das Halteelement 13' zur Aufnahme des Halbschalenelement 7b derart ausgebildet sein, dass lediglich ein mechanischer Kontakt zwischen dem Halteelement 13' und dem Halbschalenelement 7b an einem Lager (in der Darstellung von Fig. 7 nicht sichtbar dargestellt) ausgebildet ist, wobei dieses Lager in Analogie zu dem oben beschriebenen Lager 18 ausgebildet sein kann.

In anschaulichen Ausführungsformen hierin kann das Halteelement 13' bei einer Montage des zweiten Gehäuseelements 6b am ersten Gehäuseelement 6a in das Gehäuse 6 eingehaust sein. Beispielsweise kann der Haltebügel 13' in das Gehäuse 6 aufgenommen sein, indem der Haltebügel 13' Endabschnitte 13'e1 und 13'e2 aufweist, die entlang einer Längsrichtung des Haltebügels 13' an zwei gegenüberliegenden Enden davon angeordnet sind, die in einer Richtung axial zur Drehachse (vgl. Bezugszeichen D in Fig. 1) zwischen den ersten und zweiten Gehäuseelementen 6a, 6b angeordnet sind, oder die radial zur Drehachse (vgl. Bezugszeichen D in Fig. 1) innerhalb des zweiten Gehäuseelements 6b angeordnet sind.

In anschaulichen Beispielen kann der Haltebügel 13' ferner mit einem ringförmigen Flanschabschnitt (nicht dargestellt), beispielsweise mit einer darin gebildeten umlaufenden Dichtung (nicht dargestellt), verbunden sein, der zwischen dem ersten Gehäuseelement 6a und dem zweiten Gehäuseelement 6b des Gehäuses 6 eingesetzt ist, wodurch eine Abdichtung des Gehäuses 6 der Vereinzelungsvorrichtung 5' verbessert werden kann. In einigen anschaulichen Beispielen des Haltebügels 13' mit ringförmigen Flanschabschnitt (nicht dargestellt) kann der ringförmige Flanschabschnitt (nicht dargestellt) des Haltebügels 13' axial zur Drehachse (vgl. Bezugszeichen D in Fig. 1) zwischen den ersten und zweiten Gehäuseelementen 6a, 6b angeordnet sein oder es kann der ringförmige Flanschabschnitt (nicht dargestellt) zwischen dem ersten Gehäuseelement 6a und dem zweiten Gehäuseelement 6b derart angeordnet sein, dass der Haltebügel 13' in das Gehäuse 6 vollständig eingehaust sein kann, indem der ringförmige Flanschabschnitt (nicht dargestellt) bzw. der Haltebügel 13' radial zur Drehachse (vgl. Bezugszeichen D in Fig. 1) innerhalb des zweiten Gehäuseelements 6b angeordnet ist.

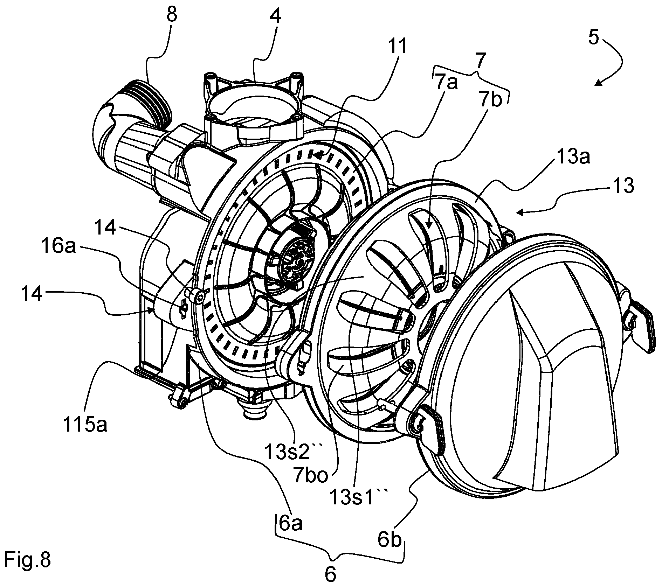

Mit Bezug auf Fig. 8 ist eine landwirtschaftliche Vereinzelungsvorrichtung 5" mit einem Halteelement 13" gemäß zu der oben mit Bezug auf Fig. 1 bis 5 beschriebenen Ausführungsformen alternativer Ausführungsformen dargestellt. Dabei unterscheidet sich die Vereinzelungsvorrichtung 5" von der hinsichtlich der Fig. 1 bis 6 beschriebenen Vereinzelungsvorrichtung 5 lediglich in der Ausgestaltung des Halteelements 13", das zu dem oben beschriebenen Halteelement 13 in einer alternativen Ausgestaltung ausgebildet ist. Abgesehen davon sind die weiteren Elemente der Vereinzelungsvorrichtung 5" gleich oder ähnlich zu den Elementen der Vereinzelungsvorrichtung 5 wie hinsichtlich der Fig. 1 bis 6 oben beschrieben ist, und damit werden gleiche Bezugszeichen hinsichtlich dieser Elemente für diese Elemente in der Vereinzelungsvorrichtung 5" verwendet. Der Übersicht halber wird auf eine erneute Beschreibung der Elemente der Vereinzelungsvorrichtung 5" mit gleichen Bezugszeichen wie der Vereinzelungsvorrichtung 5 verzichtet und die entsprechende Offenbarung wird durch Bezugnahme an dieser Stelle vollumfänglich aufgenommen. Damit gelten insbesondere die oben beschriebenen Ausführungsformen auch entsprechend im Rahmen der Vereinzelungsvorrichtung 5" und im Folgenden werden lediglich die Unterschiede zwischen dem Halteelement 13 und dem Halteelement 13" wie folgt beschrieben.

Mit Bezug auf Fig. 8 ist das Halteelement 13" als eine semisphärische Halbschale als Halterungshalbschale mit einer Mehrzahl von Aussparungen 13s1" ausgebildet, die als Materialdurchbrüche in der Halterungshalbschale 13" derart gebildet sind, dass die äußere Oberfläche 7bo des Halbschalenelements 7b teilweise freiliegt bzw. diese teilweise unbedeckt ist. Zwischen jeweils zwei benachbarten Aussparungen 13s1" ist eine radiale Materialstrebe 13s2" gebildet. Gemäß der Darstellung in Fig. 8 können zwölf radiale Materialstreben 13s2" gebildet sein. Dies stellt keine Beschränkung dar und alternativ können mehr als zwölf radiale Materialstreben ausgebildet sein.

Mit Bezug auf die obige Beschreibung sind anschauliche Ausführungsformen landwirtschaftlicher Vereinzelungsvorrichtungen beschrieben, in denen eine Vereinzelungsvorrichtung (beispielsweise die Vereinzelungsvorrichtung 5 oder 5") einen ringförmigen Flanschabschnitt 13a aufweisen, auf den die ringförmige Gehäusedichtung 6b1 des zweiten Gehäuseelements 6b aufgesetzt ist. Mit anderen Worten ist der ringförmige Flanschabschnitt 13a axial zwischen der ringförmigen Gehäusedichtung 6b1 und einem Flanschabschnitt des ersten Gehäuseelements 6a zwischengelegt bzw. der ringförmige Flanschabschnitt 13a und die ringförmige Gehäusedichtung 6b1 können von im Wesentlichen kongruenter geometrischer Gestalt sein. Dies stellt jedoch keine Beschränkung dar und der ringförmige Flanschabschnitt 13a kann von einer kleineren Abmessung sein, so dass die ringförmige Gehäusedichtung 6b1 des zweiten Gehäuseelements 6b direkt auf den Flanschabschnitt des ersten Gehäuseelements 6a aufsetzt. Mit anderen Worten erfolgt eine Abdichtung des Gehäuses 6 durch eine Montage des zweiten Gehäuseelements 6b am ersten Gehäuseelement 6a und der ringförmige Flanschabschnitt 13a der Halterung shalbschale 13 kann radial innerhalb der ringförmigen Gehäusedichtung 6b1 des zweiten Gehäuseelements 6b angeordnet sein, so dass die Halterungshalbschale 13 in die das Gehäuse 6 vollständig eingehaust ist.

Obgleich mit Bezug auf Fig. 7 ein Haltebügel 13' in Form eines bügelförmigen Streifens ausgebildet ist, stellt dies keine Beschränkung der Beschreibung dar und der Haltebügel 13' kann auch als bügelförmiger Streifen ausgebildet sein, der von einem ringförmigen Flansch (nicht dargestellt) umgeben ist. Der ringförmige Flansch kann entsprechend dem ringförmige Flanschabschnitt 13a ausgebildet sein und als Dichtung fungieren, die bei einer Montage des zweiten Gehäuseelements 6b am ersten Gehäuseelement 6a zwischen dem Flanschabschnitt des ersten Gehäuseelements 6a und der ringförmigen Gehäusedichtung 6b1 angeordnet ist. Dabei kann der ringförmige Flanschabschnitt 13a axial zwischen den ersten und zweiten Gehäuseelementen 6a, 6b als Teil einer Dichtung des Gehäuses 6 ausgebildet sein oder es kann der ringförmige Flanschabschnitt 13a in das Gehäuse 6 vollständig eingehaust sein.

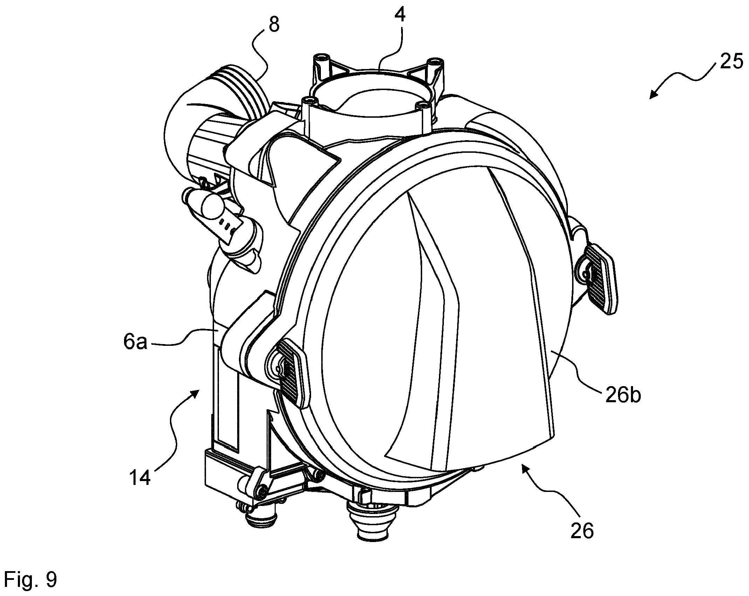

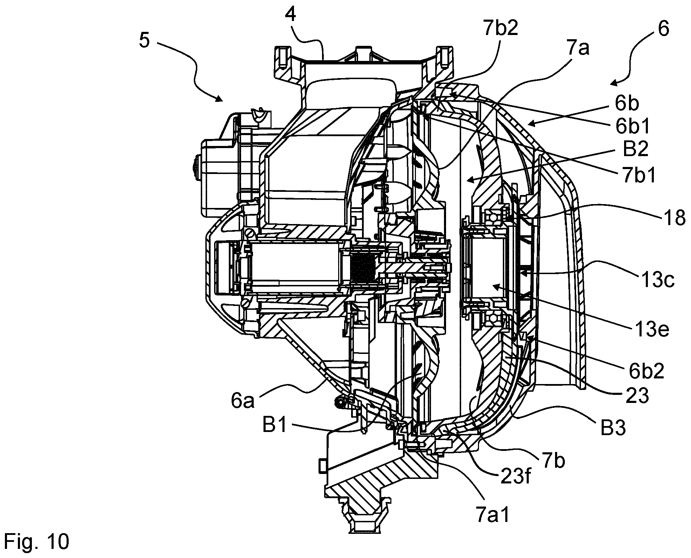

Mit Bezug auf die Fig. 9 und 10 ist eine landwirtschaftliche Vereinzelungsvorrichtung 25 mit einem Halteelement 23 gemäß zu der oben mit Bezug auf Fig. 1 bis 8 beschriebenen Ausführungsformen alternativer Ausführungsformen dargestellt. Dabei unterscheidet sich die Vereinzelungsvorrichtung 25 von der hinsichtlich der Fig. 1 bis 8 beschriebenen Vereinzelungsvorrichtungen 5, 5', 5" lediglich in der Ausgestaltung des Halteelements 23, das zu den oben beschriebenen Halteelementen 13, 13', 13" ohne eine Dichtung ausgebildet ist, so dass hier eine Dichtung eingespart werden kann. Abgesehen davon sind die weiteren Elemente der Vereinzelungsvorrichtung 25 gleich oder ähnlich zu den Elementen der Vereinzelungsvorrichtungen 5, 5', 5" wie hinsichtlich der Fig. 1 bis 8 oben beschrieben ist, und damit werden gleiche Bezugszeichen hinsichtlich dieser Elemente für diese Elemente in der Vereinzelungsvorrichtung 25 verwendet. Der Übersicht halber wird auf eine erneute Beschreibung der Elemente der Vereinzelungsvorrichtung 25 mit gleichen Bezugszeichen wie der Vereinzelungsvorrichtungen 5, 5', 5" verzichtet und die entsprechende Offenbarung wird durch Bezugnahme an dieser Stelle vollumfänglich aufgenommen. Damit gelten insbesondere die oben beschriebenen Ausführungsformen auch entsprechend im Rahmen der Vereinzelungsvorrichtung 25 und im Folgenden werden lediglich die Unterschiede zwischen der Vereinzelungsvorrichtung 25 und den Vereinzelungsvorrichtungen 5, 5', 5" wie folgt beschrieben.

Mit Bezug auf Fig. 9 ist eine perspektivische Ansicht der Vereinzelungsvorrichtung 25 dargestellt, in der das zweite Gehäuseelement 6b an dem ersten Gehäuseelement 6a angebracht ist. Dabei wird ein Gehäuse 6 vollständig durch das erste Gehäuseelement 6a und das daran angebrachte zweite Gehäuseelement 6b gebildet und an der Verbindung zwischen erstem Gehäuseelement 6a und zweitem Gehäuseelement 6b abgedichtet, so dass das erste Gehäuseelement 6a und das zweite Gehäuseelement 6b direkt aneinander anliegen. Dadurch wird ein allein schon durch eine Montage des ersten Gehäuseelements 6a am zweiten Gehäuseelement 6b ein an der Verbindung von erstem Gehäuseelement 6a und zweitem Gehäuseelement 6b abgedichtetes Gehäuse 6 bereitgestellt, ohne dass weitere abdichtende Bauteile zusätzlich zum ersten Gehäuseelement 6a und zweiten Gehäuseelement 6b notwendig sind.

Mit Bezug auf Fig. 10 ist eine Querschnittansicht der Vereinzelungsvorrichtung 25 dargestellt. Darstellungsgemäß sind die Vereinzelungsscheibe 7a und das Halbschalenelement 7b vollständig in das Gehäuse 6 aufgenommen. Weiterhin ist ein Halteelement 23 vollständig in das Gehäuse 6 aufgenommen, d.h., das Haltelement 23 ist vollständig von dem ersten Gehäuseelement 6a und dem zweiten Gehäuseelement 6b im Gehäuse 6 umgeben. In anschaulichen Beispielen hierin kann das Halteelement 23 einen Flanschabschnitt 23f aufweisen, der an wenigstens eine bezüglich der Drehachse (vgl. Bezugszeichen D in Fig. 1) radial innenliegende Kontaktfläche des ersten Gehäuseelements 6a und/oder des zweiten Gehäuseelements anliegt, wenn das zweite Gehäuseelement 6b an dem ersten Gehäuseelement 6a angebracht ist.

In anschaulichen Beispielen kann das Gehäuse 6, im Falle einer direkten mechanischen Verbindung zwischen dem Halteelement 23 und dem zweiten Gehäuseelement 6b, eine Dichtung (nicht dargestellt) an dem Halteelement 23 und/oder dem zweiten Gehäuseelement 6b zur Abdichtung an der Verbindungsstelle aufweisen.

Das Halteelement 23 in den Fig. 9 und 10 kann entsprechend einer beliebigen Ausführungsform der oben beschriebenen Halteelemente ausgebildet sein, beispielsweise kann das Halteelement 23 durch ein beliebiges der oben beschriebenen Halteelemente 13, 13', 13" realisiert sein.

Obwohl Fig. 1 hinsichtlich der Vereinzelungsvorrichtung 5 beschreiben ist, stellt dies keine Beschränkung dar und die Vereinzelungsvorrichtung 5 kann ohne weiteres durch eine der Vereinzelungsvorrichtungen 5', 5", 25 ersetzt sein, ohne dass die Offenbarung zu Fig. 1 geändert wird. Daher ist die oben zu Fig. 1 beschriebene Offenbarung gleichfalls auf die Ausführungsformen der Fig. 7 bis 10 zu verstehen.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

## Patentansprüche

1. Landwirtschaftliche Vereinzelungsvorrichtung (5, 5', 5", 25) zur Vereinzelung von körnigem Material, insbesondere Saatgut und/oder Dünger, umfassend:
ein Gehäuse (6) gebildet aus einem ersten Gehäuseelement (6a) und einem an dem ersten Gehäuseelement (6a) lösbar montierten zweiten Gehäuseelement (6b),
eine am ersten Gehäuseelement (6a) drehbar gelagerte Welle (W), die eine Drehachse (D) festlegt, und
ein Vereinzelungselement (7), das in einen im Gehäuse (6) festgelegten Innenraum aufgenommen ist, wobei das Vereinzelungselement (7) eine mit der Welle (W) drehbar gekoppelte Vereinzelungsscheibe (7a) und ein Halbschalenelement (7b) umfasst, das an die Vereinzelungsscheibe (7a) anliegt,
wobei das Vereinzelungselement (7) derart im Gehäuse (6) angeordnet ist, dass zwischen der Vereinzelungsscheibe (7a) und dem ersten Gehäuseelement (6a) ein erster Bereich (B1) festgelegt ist und zwischen der Vereinzelungsscheibe (7a) und dem Halbschalenelement (7b) ein zweiter Bereich (B2) festgelegt ist und im Innenraum zwischen dem ersten Bereich (B1) und dem zweiten Bereich (B2) mittels eines Druckreservoirs eine Druckdifferenz erzeugbar ist,
wobei die Vereinzelungsscheibe (7a) entlang ihrer Umfangsrichtung und/oder in ihrem äußeren Bereich in der Nähe der Umfangslinie in regelmäßigen Abständen geeignete Aussparungen (11) zur Mitnahme einzelner Körner des körnigen Materials aufweist, wobei die Aussparungen (11) räumliche Verbindungen zwischen dem ersten Bereich (B1) und dem zweiten Bereich (B2) des Gehäuses (6) schaffen und sich die Körner aufgrund der Druckdifferenz an diesen Aussparungen (11) anlagern, und die Vereinzelungsvorrichtung (5) ferner an geeigneter Stelle ein Abdeckelement (12) aufweist, welches zum Unterbinden der Druckdifferenz und somit einer fortdauernden Anlagerung der transportierten Körner die Aussparungen (11) zeitweise abdeckt,
**dadurch gekennzeichnet, dass**
die Vereinzelungsvorrichtung (5, 5', 5", 25) ferner ein Halteelement (13, 13', 13", 23) zur Halterung des Halbschalenelements (7b) umfasst, wobei das Halteelement (13, 13', 13", 23) mit dem Gehäuse (6) drehfest verbunden ist und das Halbschalenelement (7b) an dem Halteelement (13, 13', 13", 23) drehbar gelagert ist.

2. Vereinzelungsvorrichtung (5, 5', 5", 25) nach Anspruch 1, wobei das Halteelement (13, 13', 13", 23) an dem ersten Gehäuseelement (6a) lösbar montiert ist und das zweite Gehäuseelement (6b) mittels dem an dem ersten Gehäuseelement (6a) montierten Halteelement (13, 13', 13", 23) an dem ersten Gehäuseelement (6a) lösbar montiert ist.

3. Vereinzelungsvorrichtung (5, 5', 5") nach Anspruch 2, wobei das Halteelement (13, 13', 13") mittels eines Bajonettverschlusses (14) an dem ersten Gehäuseelement (6a) angebracht ist und der geschlossene Bajonettverschluss zwischen dem Halteelement (13, 13', 13') und dem ersten Gehäuseelement (6a) wenigstens eine Durchgangsöffnung (15a, 15b) in dem Halteelement (13, 13`, 13") mit wenigstens einer zugeordneten Durchgangsöffnung (16a, 16b) in dem ersten Gehäuseelement (6a) in eine fluchtende Ausrichtung zueinander bringt, dass wenigstens ein an dem zweiten Gehäuseelement (6b) ausgebildeter Verriegelungsstift (17a, 17b) mit den fluchtenden Durchgangsöffnungen (15a, 15b, 16a, 16b) in Eingriff steht.

4. Vereinzelungsvorrichtung (5, 5', 5", 25) nach einem der Ansprüche 1 bis 3, wobei das Halteelement (13, 13', 13", 23) mit dem darin gehalterten Halbschalenelement (7b) derart im Gehäuse (6) angeordnet ist, dass zwischen dem Halteelement (13, 13', 13", 23) und dem zweiten Gehäuseelement (6b) ein dritter Bereich (B3) gebildet ist, der an der Verbindung zwischen dem Halteelement (13, 13', 13", 23) und dem zweiten Gehäuseelement (6b) gegenüber dem zweiten Bereich (B2) abgedichtet ist.

5. Vereinzelungsvorrichtung (5') nach einem der Ansprüche 1 bis 4, wobei das Halteelement (13') als ein Haltebügel (13') ausgebildet ist.

6. Vereinzelungsvorrichtung (5, 5") nach einem der Ansprüche 1 bis 4, wobei das Halteelement (13) als eine Halterungshalbschale (13, 13") ausgebildet ist, die einen ringförmigen Flanschabschnitt (13a) aufweist, der zwischen dem ersten Gehäuseelement (6a) und dem zweiten Gehäuseelement (6b) des Gehäuses (6) angeordnet ist.

7. Vereinzelungsvorrichtung (5, 5") nach Anspruch 6, wobei zwischen dem zweiten Gehäuseelement (6b) und der Halterungshalbschale (13, 13") eine in Umfangsrichtung des zweiten Gehäuseelements (6b) gebildete ringförmige Gehäusedichtung (6b1) ausgebildet ist.

8. Vereinzelungsvorrichtung (5, 5', 5", 25) nach einem der Ansprüche 1 bis 7, wobei das Halteelement (13, 13', 13", 23) zur Aufnahme des Halbschalenelement (7b) derart ausgebildet ist, dass lediglich ein mechanischer Kontakt zwischen dem Halteelement (13, 13', 13") und dem Halbschalenelement (7b) an einem Lager (18) ausgebildet ist.

9. Vereinzelungsvorrichtung (5, 5', 5", 25) nach einem der Ansprüche 1 bis 8, wobei das erste Gehäuseelement (6a) eine Zuführungsleitung (8) aufweist, die mit dem ersten Bereich (B1) verbunden ist, um den ersten Bereich (B1) mit einem gegenüber dem zweiten Bereich (B2) erhöhten Druck zu beaufschlagen, und/oder wobei das Halterungselement (13) und/oder das zweite Gehäuseelement (6b) eine Zuführungsleitung aufweist, die mit dem zweiten Bereich (B2) verbunden ist, um den zweiten Bereich (B2) mit erniedrigtem Druck zu beaufschlagen.

10. Vereinzelungsvorrichtung (5, 5', 5", 25) nach einem der Ansprüche 1 bis 9, wobei das Gehäuse (6) ferner einen Saatguteinlass aufweist, der an dem ersten Gehäuseelement (6a) angeordnet ist.
